# EUROPEAN PATENT APPLICATION

(11) **EP 1 414 242 A1**
(43) Date of publication of application: **28.04.2004**
(21) Application number: 02746146.6
(22) Date of filing: 31.07.2002
(51) Int. Cl.: H04N 7/173

(54) **POINT-USED ELECTRONIC TRADING SYSTEM, POINT-USED ELECTRONIC TRADING METHOD, BROADCAST RECEPTION APPARATUS, AND BROADCAST RECEPTION METHOD**

(30) Priority: 02.08.2001 JP 2001234561
(71) Applicant: MATSUSHITA ELECTRIC INDUSTRIAL CO., LTD., Kadoma-shi, Osaka 571-8501 (JP)
(72) Inventor: KINDO, Toshiki, Yokohama-shi, Kanagawa 227-0044 (JP); SHIDA, Takehiko, Yokohama-shi, Kanagawa 244-0813 (JP); YOSHIDA, Hideyuki, Kyoto 610-0343 (JP); TAKASE, Hiroshi, Matsudo-shi, Chiba 271-0045 (JP); YAMAMOTO, Tatsuo, Fujisawa-shi, Kanagawa 251-0002 (JP); KAWABATA, Kazuhiko, Shinagawa-ku, Tokyo 140-0002 (JP)
(74) Representative: Balsters, Robert
(86) International application number: PCT/JP2002/007788
(87) International publication number: WO 2003/015409

(57) **Abstract**

An electronic trading method that, over a data communication network connecting the broadcast center 101, a viewer terminal 111 and an order-receiving center 131 together, in case the viewer views an advertisement of from a broadcast center 101 and places an order of an advertisement product to the order-receiving center, the order-receiving center 131 issues points and notifies the points to at least one of the viewer terminal 111 and the broadcast center 101 whereby the broadcast center 101 discounts a pay-broadcast viewing fee in an amount of the notified points. Due to this, the sponsor can promote sale without causing product price erosion and, moreover, be free from causing useless points. Furthermore, the viewer, getting points without troublesome operations, is allowed to view a pay broadcast free of charge or at a discount rate. The broadcast center can obtain advertisement value improvement and pay-broadcast demand increase.

## Description

### TECHNICAL FIELD

The present invention relates to a point-used electronic trading method, point-used electronic trading system, broadcast reception apparatus and broadcast reception method and a computer program therefor, which makes use of a program broadcast involving advertisement delivery.

### BACKGROUND ART

Conventionally, the point-used electronic trading method and the system thereof include those as described in JP-A-9-163351, for example. Fig. 11 shows a point-used electronic trading system in a prior art described in that publication.

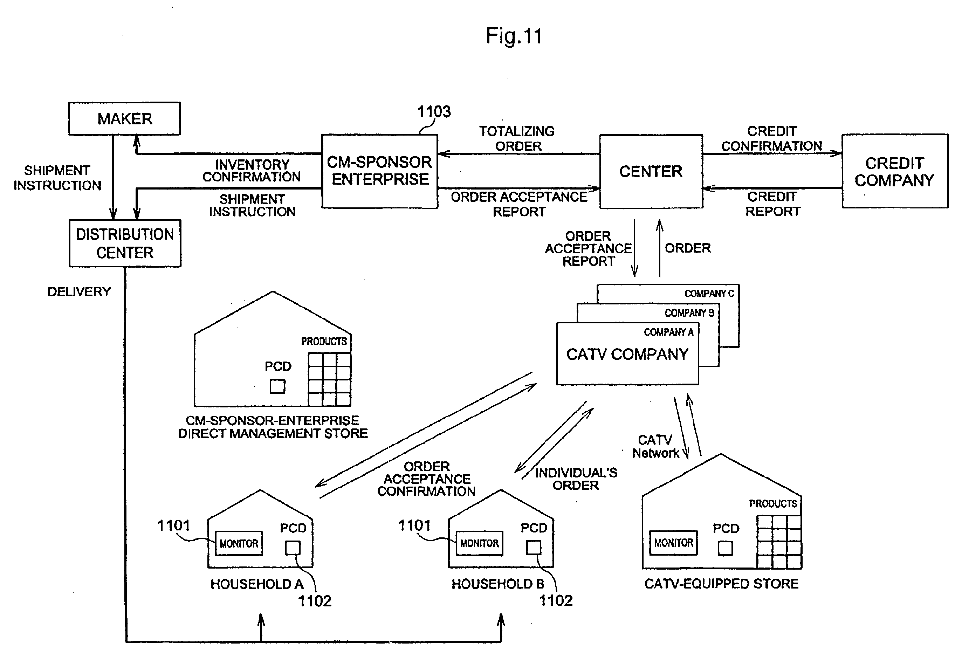

In Fig. 11, there are a recorder 1102 for each viewer who is to view a product information broadcast through a television monitor 1101, and a decoder 1102 for recording and reading connected to the television monitor. This recorder 1102 has a commercial viewing-data recording domain for cumulatively recording commercial viewing data on the product-by-product basis of a commercial-sponsor enterprise 1103. The viewer is allowed to purchase a product of the commercial-sponsor enterprise 1103, incompliance with the benefit according to the commercial viewing data cumulatively recorded on his/her own recorder 1102.

Meanwhile, there has been, as another prior art, something like a description in JP-A-7-203420. Fig. 12 shows a conventional broadcast reception method described in the above publication.

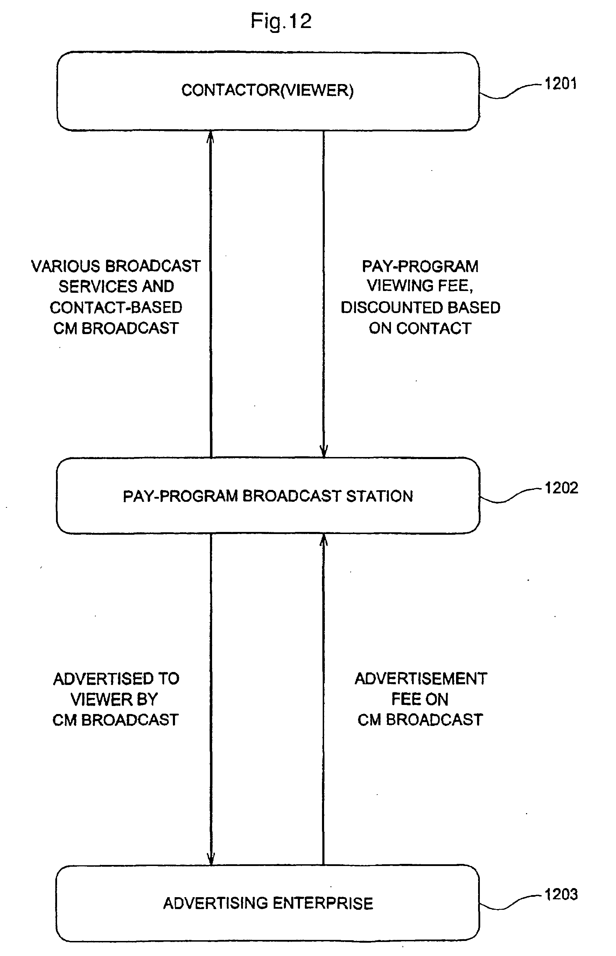

In Fig. 12, the viewer 1201 requests a pay-program broadcast station 1202, to view a program on a video-on-demand basis. At this time, the information of advertisement-viewable degree is also sent from the viewer 1201 to the broadcast station 1202. The broadcast station 1202, in turns, sends in the air a predetermined advertisement entrusted from an advertisement-sponsor enterprise 1203, together with a program, to the viewer 1201. The pay-program broadcast station 1202 discounts the rate according to the viewing time of this advertisement.

Furthermore, there has been, as another prior art, something like a description in JP-A-11-18113. Fig. 13 shows a conventional broadcast reception apparatus and broadcast reception method and a computer program therefor, described in the above publication.

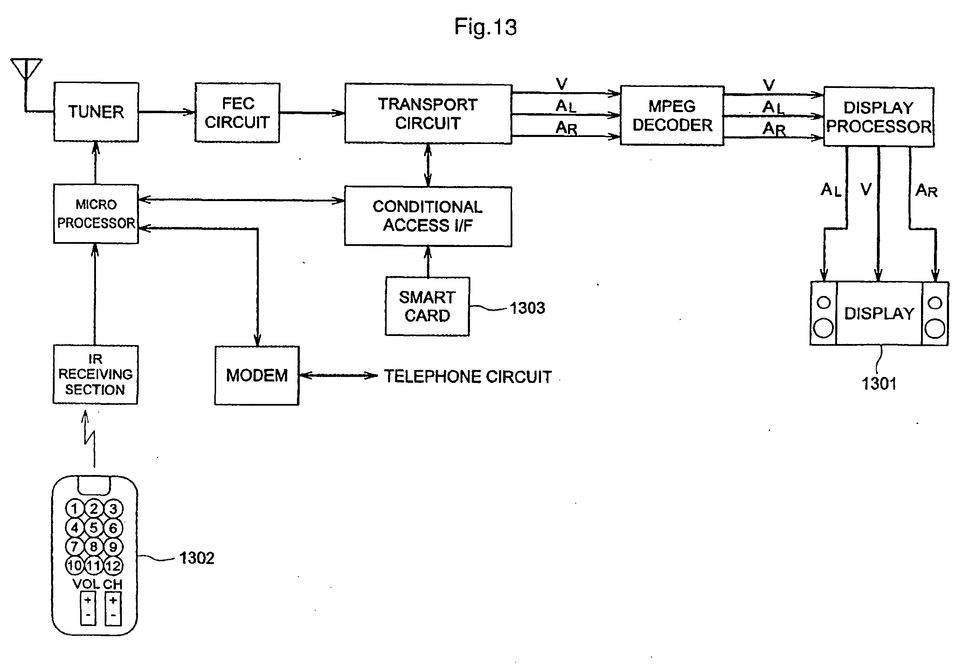

In Fig. 13, when a commercial program is displayed on a display 1301, the viewer is requested to make an answer. When the viewer operates a remote control 1302 and makes an answer to the answer request for a commercial program, points are added onto a smart card 1303. By utilizing the points recorded in the smart card 1303, a pay program can be viewed.

However, in the configuration of the JP-A-9-163351 publication, benefit is provided only on purchasing an advertisement product. Consequently, the advertisement-sponsor enterprise readily accepts the discount on its own product, wherein the benefit, if excessively great, possibly leads to product price erosion. Meanwhile, there has been a problem that the benefit, if excessively small, could not appeal the merit on the point system to the viewer.

In the configuration of the JP-A-7-203420 publication, because the viewer if even viewed an advertising broadcast is allowed to watch a pay program at a discount in accordance with points, there is a possibility that advertisement be actually not viewed. There has been a problem that the point system not necessarily exhibits an effect for the sale of advertisement product to the intention of advertisement-sponsor enterprise.

As the means for solving the problem, there is a proposal of a method to request an answer to the viewer so that points are provided correspondingly to the answer, as shown in the configuration of the JP-A-11-18113 publication. However, this raises troublesomeness in operation to the viewer, thus having a problem of being less adoptable.

Another problem includes a failure to increasing the demand for pay program broadcast due to overpowering cheaper video rental.

Furthermore, recently, by the progress of channel increase due to digitalizing the broadcast mediums such as terrestrial television broadcast, satellite broadcast and cable television broadcast, viewing programs are made sporadic resulting in lowering audience rating. For this reason, there arises a problem of increasing burden of television advertisement cost on the advertisement-sponsor enterprises.

Furthermore, there is a spreading way of viewing called time-shift that desired programs are stored by a personal video recorder or HDD-equipped television so that they are viewed at a desired time. Due to this, there are occurrences of the situation that recording is by cutting off advertisement or advertisement is fast-forwarded during playback not to view it.

These are posing a serious problem for advertisement-sponsor enterprises and broadcast stations.

### DISCLOSURE OF THE INVENTION

It is an object of the present invention to provide a point-used electronic trading method, point-used electronic trading system, broadcast reception apparatus and broadcast reception method and a computer program therefor, which prompts the viewer to view an advertisement and enables sales promotion without an easygoing discount of the advertisement product, and leads to a demand increase for pay broadcast.

A point-used electronic trading method of the present invention is an electronic trading method that, over a data communication network connecting a broadcast center, a viewer terminal and an order receiving center together, a pay broadcast, an advertisement and product attribute information thereof from the broadcast center are viewed to place an order of an advertisement product from the viewer terminal thereby involving point exchange, having: in the order receiving center, a step of receiving an order of an advertisement product from the viewer terminal; a step of computing points in accordance with the advertisement product by the order and sending the points and sponsor information of the ordered product to the broadcast center; and a step of sending the points to the viewer terminal; in the broadcast center, a step of accumulating received points associatively with sponsor information; in the viewer terminal, a step of accumulating received points, and sending billing information subtracted by a credit in an amount of the points from program-viewed billing information including a time viewed pay broadcasts to the broadcast center; and a step of subtracting consumed points from accumulated points.

According to this, because the benefit obtainable on the points gained by the viewer is not to directly discount a product but to enable viewing a pay broadcast free of charge or at a discount rate, thus making it possible to promote sale without causing product price erosion. Meanwhile, because points are issued upon receiving the order of an advertisement product, the sponsor is not required to issue useless points. Meanwhile, the viewer can gain points by merely viewing advertisement without particularly making a troublesome operation, hence becoming to positively view advertisements. Due to this, the broadcast center can obtain advertisement value improvement and pay-broadcast demand increase.

Also, a point-used electronic trading method of the invention is an electronic trading method that, over a data communication network connecting a broadcast center, a viewer terminal and an order receiving center together, a pay broadcast, an advertisement and product attribute information thereof from the broadcast center are viewed to place an order of an advertisement product from the viewer terminal thereby involving point exchange, having: in the order receiving center, a step of receiving an order of an advertisement product from the viewer terminal; a step of computing points in accordance with the advertisement product by the order and sending the points and sponsor information of the ordered product to the broadcast center; and a step of sending the points to the viewer terminal; in the broadcast center, a step of accumulating received points associatively with sponsor information; a step of subtracting a credit in an amount of received point from program-viewed billing information; and a step of sending consumed points to the viewer terminal; in the viewer terminal, a step of accumulating received points and sending accumulated points to the broadcast center; and a step of subtracting consumed points from accumulated points.

According to this, further in the broadcast center, the exchange rate of points and pay-broadcast viewing time can be freely changed in setting, at any time and based on each viewer terminal or associatively with the total viewing time on the viewer terminal.

Also, a point-used electronic trading method of the invention is an electronic trading method that, over a data communication network connecting a pay-broadcast customer management center for managing viewing fee of pay broadcast on a customer-by-customer basis, a viewer terminal and an order receiving center together, a pay broadcast, an advertisement and product attribute information thereof from the broadcast center are viewed to place an order of an advertisement product from the viewer terminal thereby involving point exchange, having: in the order receiving center, a step of receiving an order of an advertisement product from the viewer terminal; and a step of computing points in accordance with the advertisement product by the order and sending the points, sponsor information of the ordered product and ordering-viewer information to the pay-broadcast customer management center; in the pay-broadcast customer management center, a step of accumulating received points associatively with sponsor information and viewer information; a step of subtracting, from program-viewed billing information received from the viewer terminal, a credit in an amount of received points accumulated associatively with the same viewer information, and subtracting consumed points from the points accumulated associatively with the viewer information; in the viewer terminal, a step of sending program-viewed billing information including a time viewed pay programs to the pay-program broadcast customer center.

According to this, because issued points and gained points are managed at the order-receiving center or in one place, matching check can be easily done for issued points and gained points. Furthermore, point management is not affected by a fault or unauthorized use of the viewer terminal. It is possible to provide a point-used electronic trading method reliable for a sponsor.

Also, a point-used electronic trading method of the invention has, in the viewer terminal, an advertisement-viewing storing step of storing that an advertisement from the broadcast center has been viewed, a step of determining whether or not the product the viewer has placed an order is a product meeting the product attribute information stored in the advertisement-viewing storing step, and a step of attaching information of having viewed the product in an order in a case of a determination as a product meeting the stored product attribute information, and in the order-receiving center, a step of issuing points only in a case that the order from the viewer terminal is attached with information having viewed the product.

According to this, points are provided only in the case that the viewer has purchased a product meeting the product attribute of an advertisement product viewed by the viewer, the viewer is induced to positively view advertisements, thus enhancing the effectiveness of advertising broadcast. For the sponsor, product recognition degree is enhanced by the increase of advertisement audience rating, thereby making it possible to increase the order of its own product.

A point-used commerce trading system of the invention has: product attribute attaching means for attaching product attribute information including a presence or absence of points to an advertisement; broadcast means for broadcasting an advertisement attached with the product attribute information; video receiving means for receiving the advertisement; video display means for displaying the advertisement; attribute information accumulating means for accumulating product attribute information of the advertisement displayed; order means for a viewer to place an order of a product meeting the product attribute information; point generating means for generating points according to an order of a product; enterprise point accumulating means for associatively accumulating the points and sponsor information; point information transmitting means for sending the points generated, and both the points and the sponsor information accumulated in the enterprise point accumulating means; point accumulating means for receiving and accumulating points from the point information transmitting means; point exchange means for subtracting a credit in an amount of the points from billing information on pay broadcast; means for sending billing information subtracted by the point exchange means; and accumulation point remainder updating means for subtracting points consumed in subtracting the billing information from the point accumulating means and replacing same with accumulated points.

Also, a point-used commerce trading system of the invention has: product attribute attaching means for attaching product attribute information including a presence or absence of points to an advertisement; broadcast means for broadcasting an advertisement attached with the product attribute information; video receiving means for receiving the advertisement; video display means for displaying the advertisement; attribute information accumulating means for accumulating product attribute information of the advertisement displayed; order means for a viewer to place an order of a product meeting the product attribute information; point generating means for generating points according to an order of a product; enterprise point accumulating means for associatively accumulating the points and sponsor information; point information transmitting means for sending the points generated, and both the points and the sponsor information accumulated in the enterprise point accumulating means; point accumulating means for receiving and accumulating points from the point information transmitting means; accumulated-point transmitting means for sending, program-viewed billing information including the points accumulated in the point accumulating means and a time pay broadcast has been viewed; point exchange means for subtracting from the program-viewed billing information in accordance with the points from this accumulated-point transmitting means; consumed-point notifying means for sending points consumed in subtracting the billing information; and accumulated-point remainder update means for subtracting consumed points received from the consumed-point notifying means from the point accumulating means and replacing same with accumulated points.

Also, a point-used commerce trading system has: product attribute attaching means for attaching product attribute information including a presence or absence of points to an advertisement; broadcast means for broadcasting an advertisement attached with the product attribute information; video receiving means for receiving the advertisement; video display means for displaying the advertisement; attribute information accumulating means for accumulating product attribute information of the advertisement displayed; order means for a viewer to place an order of a product meeting the product attribute information; point generating means for generating points according to an order of the product; point-information transmitting means for sending the points, sponsor information and ordering viewer information; point accumulating means for respectively accumulating points received from the point-information transmitting means associatively with sponsor information and viewer information similarly received; accumulated-point transmitting means for sending program-viewed information billing information including a time pay broadcast has been viewed; point exchanging means for subtracting a credit in an amount of points accumulated associatively with the same viewer information from the program-viewed billing information; and accumulated-point remainder update means for subtracting points consumed in subtracting the billing information from remaining points corresponding to the viewer information of within the point accumulating means and replacing same with accumulated points.

A broadcast reception apparatus of the invention has: a receiving section for receiving a broadcast; an attribute information extracting section for extracting product attribute information including a presence or absence of advertisement points from a signal received by the receiving section; an attribute information storing section for accumulating product attribute information extracted at the attribute information extracting section; a product designating section for designating a product a viewer desires for placing an order; an order-product determining section for determining whether or not the product meets product attribute information stored in the attribute information storing section; a point product ordering section for outputting order information and point-requesting information in a case determined meeting by the order-product determining section; a point receiving section for receiving points given from an order-receiving side according to an order from the point product ordering section; a gained-point accumulating section for accumulating points received by the point receiving section; a billing-information transmitting section for sending, to a broadcast distribution source, billing information that points accumulated in the gained-point accumulating section are subtracted from billing information of pay broadcast; and a gained-point operating section for subtracting points assigned to the billing from gained points.

Also, a broadcast reception apparatus of the invention has: a receiving section for receiving a broadcast; an attribute information extracting section for extracting product attribute information including a presence or absence of advertisement points from a signal received by the receiving section; an attribute information storing section for accumulating product attribute information extracted by the attribute information extracting section; a product designating section for designating a product a viewer desires for placing an order; an order-product determining section for determining whether or not the product meets product attribute information stored in the attribute information storing section; a point product ordering section for outputting order information and point-requesting information in a case determined meeting by the order-product determining section; a point receiving section for receiving points given from an order-receiving side according to an order from the point product ordering section; a gained-point accumulating section for accumulating points received by the point receiving section; a billing-point information transmitting section for sending, to a broadcast distribution source, billing information of pay broadcast and points accumulated in the gained-point accumulating section; and a gained-point operating section for receiving the points assigned to billing, and subtracting the received points assigned to billing from gained points.

Also, a broadcast reception apparatus of the invention has: a receiving section for receiving a broadcast; an attribute information extracting section for extracting product attribute information including a presence or absence of advertisement points from a signal received by the receiving section; an attribute information storing section for accumulating product attribute information extracted by the attribute information extracting section; a product designating section for designating a product a viewer desires for placing an order; an order-product determining section for determining whether or not the product meets product attribute information stored in the attribute information storing section; a point product ordering section for outputting order information and point-requesting information in a case determined meeting by the order-product determining section; and a billing-information transmitting section for sending billing information of pay broadcast.

A broadcast reception method of the invention has: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; a point accumulating step of accumulating points received from an order receiving side according to an order from the point-product order step; a billing-information transmitting step of sending billing information that a credit in an amount of the accumulated points is subtracted from program-viewed billing information of pay broadcast, to a center managing pay-broadcast billing on a viewer-by-viewer basis; and a point remainder update step of updating the points accumulated into points subtracted by the points assigned to billing.

Also, a broadcast reception method of the invention has: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; a point accumulating step of accumulating points received from an order receiving side according to an order from the point-product order step; a billing-point information transmitting step of sending pay-broadcast billing information and the points accumulated to a center managing pay-broadcast billing on a viewer-by-viewer basis; and a gained-point operating step of receiving the points assigned to billing, and subtracting the received points assigned to billing from gained points.

Also, a broadcast reception method of the invention has: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; and a billing-information transmitting step of sending pay-broadcast billing information to a center managing pay-broadcast billing on a viewer-by-viewer basis.

A computer program product and a storage medium for providing the computer program of the invention comprise: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; a point accumulating step of accumulating points received from an order receiving side according to an order from the point-product order step; a billing-information transmitting step of sending billing information that a credit in an amount of the accumulated points is subtracted from program-viewed billing information of pay broadcast, to a center managing pay-broadcast billing on a viewer-by-viewer basis; and a point remainder update step of updating the points accumulated into points subtracted by the points assigned to billing.

Also, A computer program product and a storage medium for providing the computer program of the invention comprises: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; a point accumulating step of accumulating points received from an order receiving side according to an order from the point-product order step; a billing-point information transmitting step of sending pay-broadcast billing information and the points accumulated to a center managing pay-broadcast billing on a viewer-by-viewer basis; and a gained-point operating step of receiving the points assigned to billing, and subtracting the received points assigned to billing from gained points.

Also, A computer program and a storage medium for providing the computer program of the invention comprises: an attribute-information extracting step of extracting product attribute information including a presence or absence of advertisement points from a received broadcast; an attribute information storing step of accumulating product attribute information extracted in the attribute-information extracting step; an order-product determining step of determining whether or not a product a viewer has designated for placing an order meets product attribute information stored; a point-product order step for outputting order information and point-requesting information in a case determined meeting by the order-product determining step; and a billing-information transmitting step of sending pay-broadcast billing information to a center managing pay-broadcast billing on a viewer-by-viewer basis.

As in the above, according to the present invention, because the viewer is allowed to obtain a benefit by placing an order through viewing advertisement and encouraged to actively view advertisement, sponsor's advertisement effect can be enhanced. Meanwhile, because the sponsor grants a benefit when its own product is purchased, it can directly lead it to a sale increase of its own product without causing useless cost. Consequently, because the confirmation as to whether advertisement has been viewed or not is not important, there is no need to request for a troublesome answer for confirming whether the viewer is viewing advertisement or not. Meanwhile, because of not discounting a product of ones own company, there is no possibility of price erosion of a product of ones own company. Furthermore, for a pay broadcaster, the effectiveness of TV advertisement can be enhanced, further increasing the demand for pay broadcast from viewers.

### BRIEF DESCRIPTION OF THE DRAWINGS

Fig. 1 is a configuration diagram of a point-used electronic trading system in embodiment 1 of the present invention.
Fig. 2 is a flowchart explaining the operation of embodiment 1 of the invention.
Fig. 3 is a flowchart explaining the operation of embodiment 2 of the invention.
Fig. 4 is a configuration diagram of a point-used electronic trading system in embodiment 3 of the present invention.
Fig. 5 is a flowchart explaining the operation of embodiment 3 of the invention.
Fig. 6 is a configuration figure of broadcast signals in embodiments 1 to 3 of the invention.
Fig. 7 is a data form figure of product attribute information in embodiments 1 to 3 of the invention.
Fig. 8 is a data form figure of product order information in embodiments 1 to 3 of the invention.
Fig. 9 is a data form figure of billing information in embodiments 1 to 3 of the invention.
Fig. 10 is a concept figure explaining a database in an order-receiving center of embodiment 3 of the invention.
Fig. 11 is a configuration diagram of a distribution system utilizing a conventional two-way media.
Fig. 12 is a concept figure in a conventional two-way broadcast scheme.
Fig. 13 is a configuration diagram of a conventional digital television signal receiving apparatus.
Fig. 14 is a configuration figure of a viewer terminal in embodiment 1 of the invention.
Fig. 15 is a configuration diagram of a point-used electronic trading system in embodiment 4 of the invention.

### BEST MODE FOR CARRYING OUT THE INVENTION

Hereunder, the present invention will be explained in detail along with the drawings.

### (Embodiment 1)

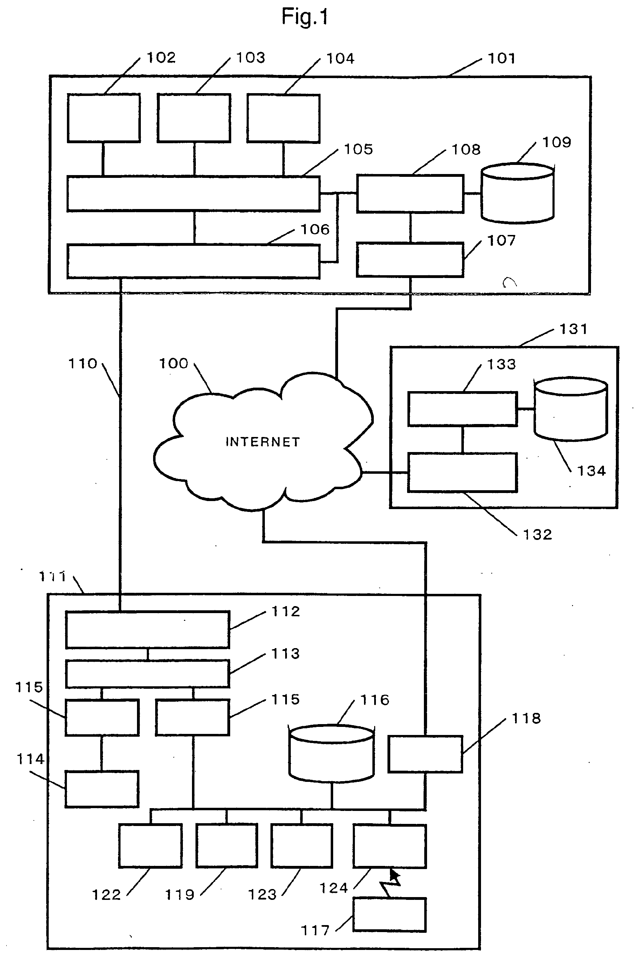

Fig. 1 shows a configuration diagram of a point-used electronic trading system in a first embodiment of the present invention.

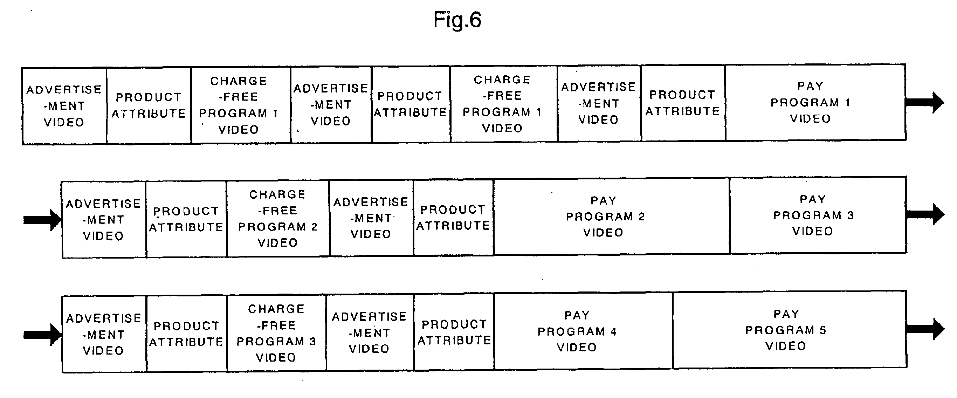

In Fig. 1, a broadcast center 101 has a program video 102, an advertisement video 103, a multiplexer for multiplexing advertisement video 103 content, e.g. product attribute information 104 including product names, product item numbers, maker names, point-assignment/non-assignment discrimination, advertising broadcast session and advertising broadcast areas, and a broadcast transmitter 106 for sending a broadcast signal as its output. The broadcast center 101 sends a pay program, besides a free-charged program and advertisement, through a broadcast network 110 as shown in Fig. 6, wherein the pay program is scrambled. This pay program is on the pay-per-view (PPV) basis, i.e. the broadcast center 101 charges the fee on the basis of the program the viewer has viewed.

Incidentally, the medium for transmitting the broadcast signal may be anything allowing the broadcast signal to reach from a broadcast center as a transmission source of broadcast signal over to the viewer, not being limited to a broadcast radio wave.

Meanwhile, the broadcast center 101 has a DSU/CSU 107 connected to the Internet 100, a database 109 accumulating the billing information of from a viewer terminal 111 and the issued-point information on each sponsor of from an order-receiving center 131, and a computer 108 for managing those.

The viewer terminal 111 has a tuner 112 for receiving a broadcast, a demultiplexer 113 for separating a received multiplex broadcast signal into a program video 102, an advertisement 103 and product attribute information 104, a monitor 114 for displaying the separated one of program video 102 and advertisement 103, and a storage 116 for storing product attribute information 104 corresponding to the advertisement 103 displayed on the monitor and the points received from the order-receiving center 131, a remote control 117 for the viewer to place an order of a product, and a modem 118 for communication with the broadcast center 101 and order-receiving center 131 through the Internet 100.

The order-receiving center 131 has a DSU/CSU 132 for communication with the Internet 100, a computer 133 for carrying out order processing and point issuance, and a product database 134.

The point-used electronic trading system of the invention is configured with the foregoing broadcast center 101, viewer terminal 111 and order-receiving center 131 connected together by the Internet 100.

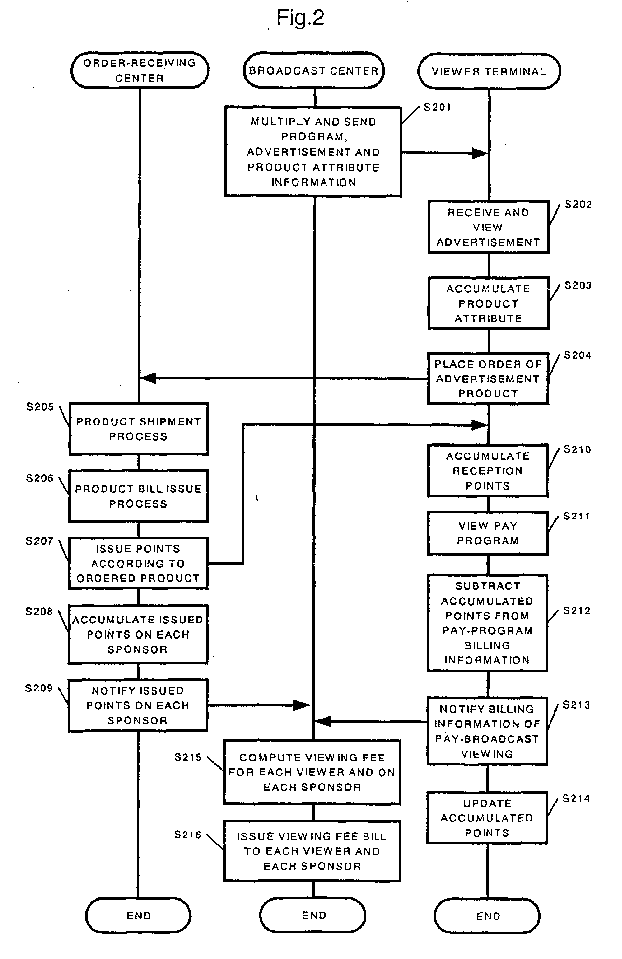

The point-used electronic trading system configured as above is described in its operation and function in the below, by using a flowchart shown in Fig. 2.

In the outset, the program video 102, the advertisement 103 and the product attribute information 104 are multiplexed in the multiplexer 105 and then outputted onto the broadcast network 110 of terrestrial television broadcast, satellite broadcast, cable television broadcast, broadband or the like (step S201).

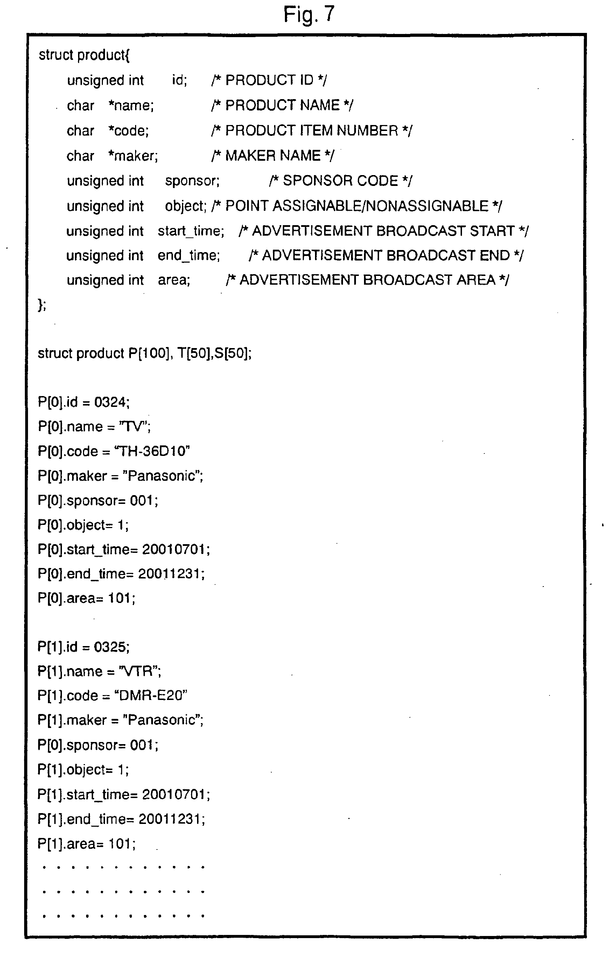

The viewer terminal 111 receives the broadcast at the tuner 112 and separates again, at the demultiplexer 113, into a program video 102, an advertisement 103 and product attribute information 104. The separated program video 102 and advertisement 103 is displayed on the monitor 114 through the decoder 115 (step S202). At this time, the product attribute information 104 corresponding to the displayed advertisement 103 is accumulated in a data form shown in Fig. 7, to a product attribute storing domain of within the storage 116 (step S203).

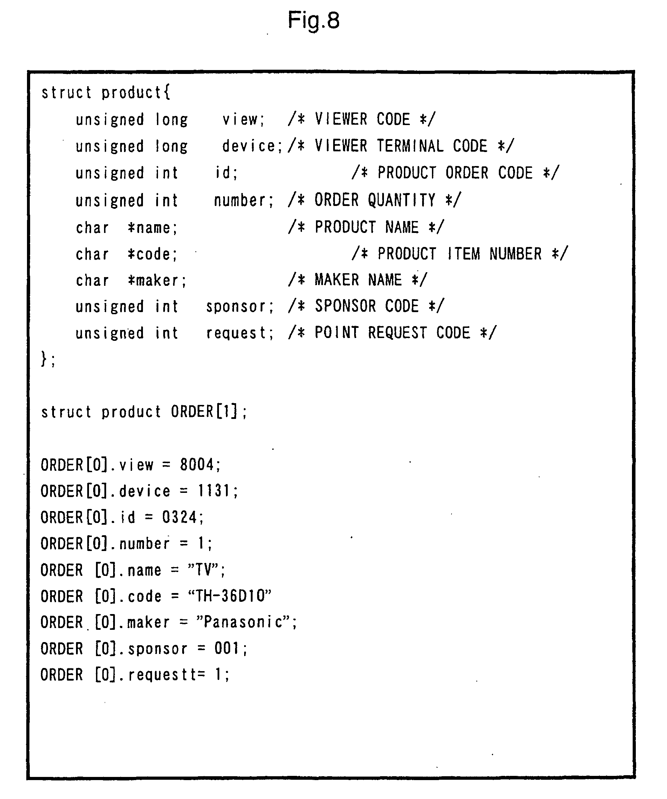

Then, when the viewer inputs a viewer code and product order code from the remote control 117, the CPU 119 of the viewer terminal 111 checks for whether or not the product attribute information 104 has been accumulated in the product attribute storing domain of within the storage 116. In the case accumulated, a points-issuance request code is sent in a data form shown in Fig. 8, together with the viewer code and order code, to the order-receiving center 131 via the Internet 100 (step S204). Meanwhile, by presenting a link destination, such as a URL of a maker corresponding to the product of product attribute information 104, it is possible to view related product introduction, company outline and the like.

The order-receiving center 131 receives an order from the viewer terminal 111, to carry out a process of product shipment (step S205) and a process of charge settlement from the viewer's account (step S206), furthermore issuing points to the viewer (step S207). The points are determined by a product code table accumulated in the database 134 and the number upon purchase, and sent to the viewer terminal 111 via the Internet 100.

Simultaneously, the points are accumulated to the database 134, based on each sponsor of the ordered product (step S208). The points issued in the relevant month are sent once per month to the broadcast center 101 (step S209). The sponsor, in a certain case, is a product maker but, in another case, is a company importing or selling the product.

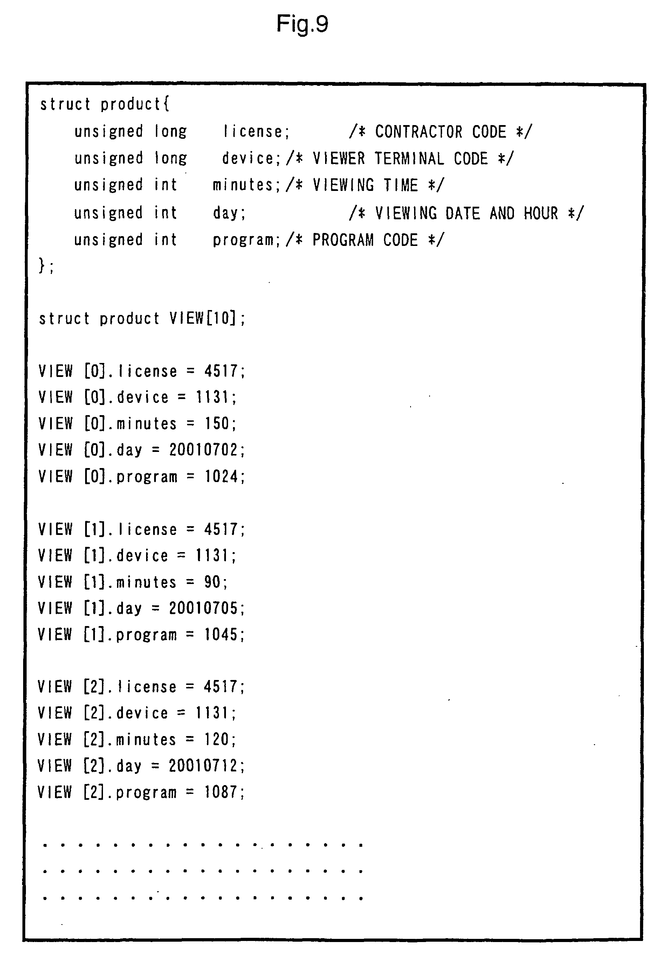

At the viewer terminal 111, the CPU 119 stores the sent points to a cumulative-point storing domain of within the storage (step S210). Meanwhile, the viewer terminal 111 is monthly inquired as to billing information such as viewing time, viewing date and time and program code, of the pay programs viewed in the relevant month (step S211) in a data form shown in Fig. 9, from the broadcast center 101 through the Internet 100. At this time, the viewer terminal 111 answers (step S213) the billing information subtracted (step S212), from that billing information, by a viewing time in an amount of viewing fee at a preset rate corresponding to the points stored in the cumulative-point storing domain of within the storage 116. On this occasion, it is preferred to indicate the amount of reduced charge, in respect of inducing the viewer to view the advertisement. Meanwhile, the CPU 119 subtracts the points assigned to the answer from the cumulative points, and stores it to the cumulative-point storing domain (step S214).

The computer 108 of the broadcast center 101 inquires of the viewer terminal 111 as to the billing information of the relevant month in the above manner, and records the obtained billing information to the database 109 on a viewer-by-viewer basis. This record thereafter is computed as a viewing fee, to issue a bill to each viewer (step S215).

Meanwhile, from the order-receiving center 131, the points monthly issued are sent as sponsor-based information to the broadcast center 101 (step S209) and stored to the database 109. This record thereafter is computed as a viewing fee, to issue a bill to each sponsor (step S216).

There is sufficiently a possibility of a difference between the enterprise having been entrusted advertisement to the broadcast center 101 and the enterprise shouldering the viewing fee in the amount of issued points. Consequently, the product attribute information shown in Fig. 7 and the sponsor code in the product order information shown in Fig. 8 are necessarily enterprise information of shouldering the viewing fee on issued points.

Incidentally, the viewer terminal 111 can be realized by the foregoing function held in a set top box (STB).

By carrying out the process as above, by merely placing an order of a product at the viewer terminal 111, the viewer is given a benefit for viewing automatically a pay broadcast free of charge or at a discount rate in accordance with the points, without being substantially conscious of having viewed or not viewed advertisement 103 on the ordered product. Of course, the viewer, because the viewer has a possibility to gain points by viewing advertisement 103, he/she becomes positive to view it, making it possible to enhance the effectiveness of advertising broadcast.

Meanwhile, although embodiment 1 makes a billing according to viewing time, billing can be on the viewing fee on a viewed-program basis or on a monthly basis without limited to viewing time. In the former case, points required can be changed depending upon a program or equal points be applied thoroughly. Meanwhile, in the latter case, monthly viewing fee can be reduced according to points.

For the sponsor, the order of its own product is increased by enhancing recognition degree of the product owing to the improvement of advertisement audience rating. Also, because points are given by order only, useless cost not leading to sale can be suppressed from occurring.

The pay broadcast company has an increased demand the viewer utilizes points, thus enabling to advance the spread of pay broadcast.

Furthermore, in this embodiment, because gained points are accumulated at the viewer terminal 111, the broadcast center 101 does not require to manage points on a viewer-by-viewer basis. Accordingly, the burden of customer management can be suppressed at the broadcast center 101.

Meanwhile, the broadcast center 101 of this embodiment is configured to make a viewing-fee control for viewers and a viewing-fee control based on the points by the sponsor. However, with a configuration for carrying out those at a pay-broadcast customer management center, the broadcast center 101 particularly is eliminated of the necessity of connection to the Internet, making it possible to avoid the danger that important programs or advertisement contents be hacked from the external.

Incidentally, in this embodiment, although program and advertisement are multiplexed together for transmission, advertisement and product attribute information can be broadcast on a channel different from the program.

Meanwhile, in this embodiment, the points associated with sponsor information are accumulated at the order-receiving center 131. However, sponsor information and points may be notified to the broadcast center 101 each time order-receiving center 131 issues points, so that the broadcast center 101 can accumulate the points associated with the sponsor information.

Furthermore, there is possibly a case that one sponsor enterprise and the broadcast center are of the same enterprise. In this case, the same effect is obtainable by similarly processing to the other sponsor enterprise at the order-receiving center.

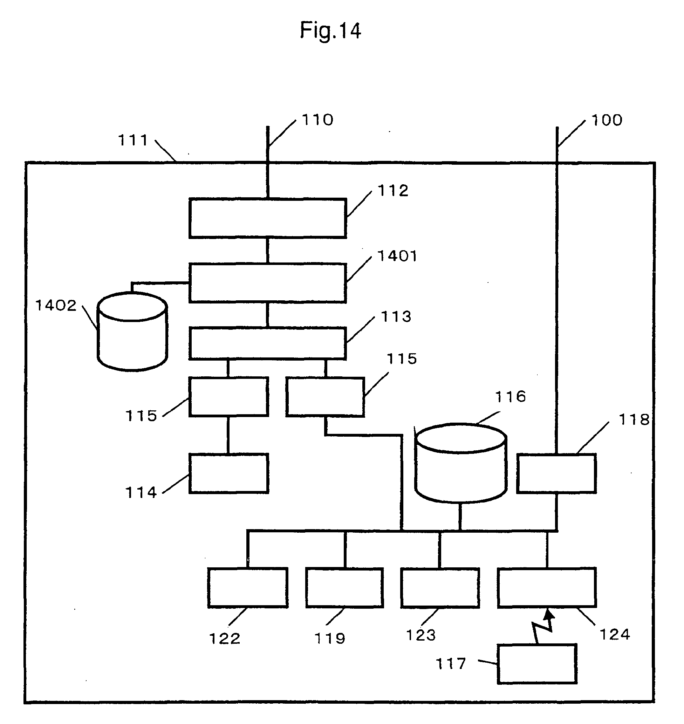

Meanwhile, in Fig. 14 is shown a viewer terminal realizing a time-shift function. This viewer terminal 111 is different from the viewer terminal 111 of the above embodiment in that a video-recording control device 1401 exists between a tuner 112 and a demultiplexer 113, which automatically records a program the viewer previously designated for recording to a program storage device 1402.

When the accumulated program is reproduced, the program data from the video-recording control device 1401 is separated as program video, advertisement and product attribute information by the demultiplexer. Then, these are respectively outputted to a monitor 114 and a storage 116.

Due to this, in the case that time-shift function is utilized, the product attribute information is recorded to the storage 116 similarly to embodiment 1 when viewing the recorded program. Accordingly, points can be similarly gotten when placing an order of that product.

Meanwhile, although this embodiment exchanges billing information and points over the Internet, the viewing fee of pay program can be paid by a prepaid card at the viewer terminal. In this case, the viewer purchases a prepaid card issued by the broadcast center, to set and use this on the viewer terminal. The viewer terminal reads the points for viewing of the prepaid card by a card reader. When a pay program is designated, the points are consumed. The viewer, when viewing an advertisement and placing an order of a product, gets points in accordance with the product as a prepaid card from the order-receiving center. With this acquired prepaid card, pay broadcasts can be viewed furthermore.

By the method like this, the similar effect can be obtained also by exchanging a prepaid card without delivering billing information and points over the Internet.

### (Embodiment 2)

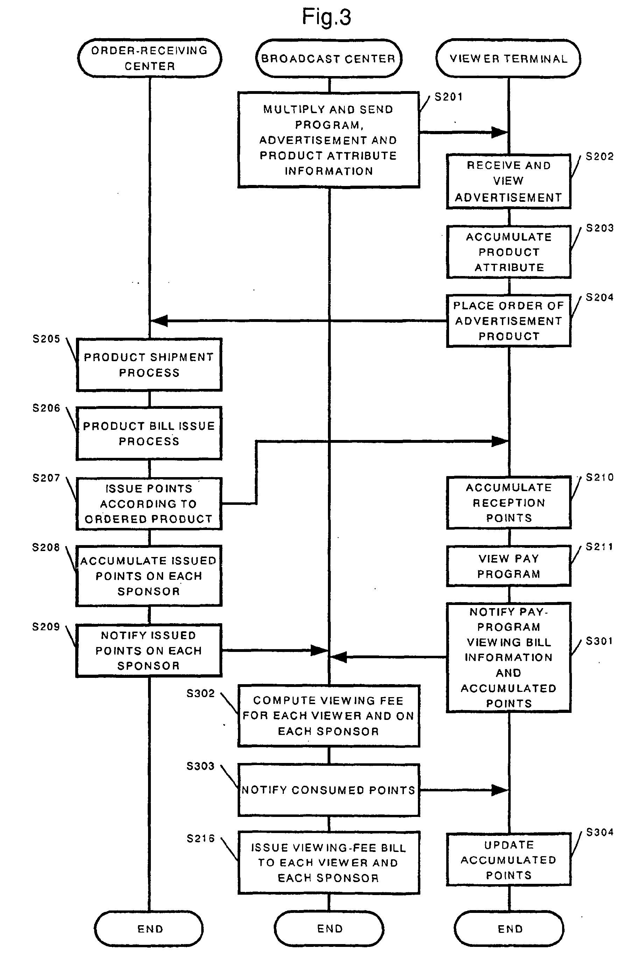

Fig. 3 is a flowchart explaining the operation of point-used electronic trading system in a second embodiment of the invention.

In Fig. 3, the difference from the first embodiment lies in that, when the viewer terminal 111 is inquired as to the points stored in the cumulative-point storing domain of within the storage 116 and the billing information of the programs viewed in the relevant month by the broadcast center 101 once per month through the Internet 100, it answers as they are without making a subtraction process on the billing information (step S301), and in that the computer 108 of the broadcast center 101 records the billing information subtracted, from the viewed-program billing information obtained from the viewer terminal 111, by a viewing time in an amount of a viewing fee at a preset rate corresponding to the gained points similarly obtained from the viewed-program billing information to the database 109 on a viewer-by-viewer basis (step S302). This record thereafter is computed as a viewing fee, to issue a bill to each viewer (step S216). Meanwhile, from the order-receiving center 131, the points monthly issued is sent on a sponsor-by-sponsor basis (step S209), and stored to the database 109. This record thereafter is computed as a viewing fee, to issue a bill to each sponsor (step S216), which is similar to the first embodiment. The points consumed at the broadcast center 101 are sent to the viewer terminal 111 (step S303). In the viewer terminal 111, cumulative points are updated (step S304).

Similarly to the first embodiment, there is sufficiently a possibility of a difference between the enterprise having been entrusted advertisement to the broadcast center 101 and the enterprise shouldering the viewing fee in an amount of issued points. Consequently, the product attribute information shown in Fig. 7 and the sponsor code in the product order information shown in Fig. 8 are necessarily enterprise information of shouldering the viewing fee in an amount of points to issue.

By carrying out the process as above, besides the effect realized in the first embodiment, the second embodiment can freely change, at the broadcast center 101, the setting of an exchange rate between points and pay-broadcast viewing time, at any time and on each viewer terminal or associatively with the total viewing time on the viewer terminal.

Meanwhile, although this embodiment is configured for the broadcast center 101 to carry out viewing-fee control for the viewer and point-used viewing-fee control for the sponsor, configuration is possible for carrying out these at the pay-broadcast customer management center. In such a case, similar effect can be realized.

Incidentally, although this embodiment sends a program and an advertisement by multiplexing, the advertisement and product attribute information can be broadcast on the different channel from the program.

Meanwhile, in this embodiment, although the order-receiving center 131 accumulated the points associated with sponsor information, the broadcast center 101 is notified of sponsor information and points each time the order-receiving center 131 issues points, so that the points associated with the sponsor information is accumulated at the broadcast center 101.

### (Embodiment 3)

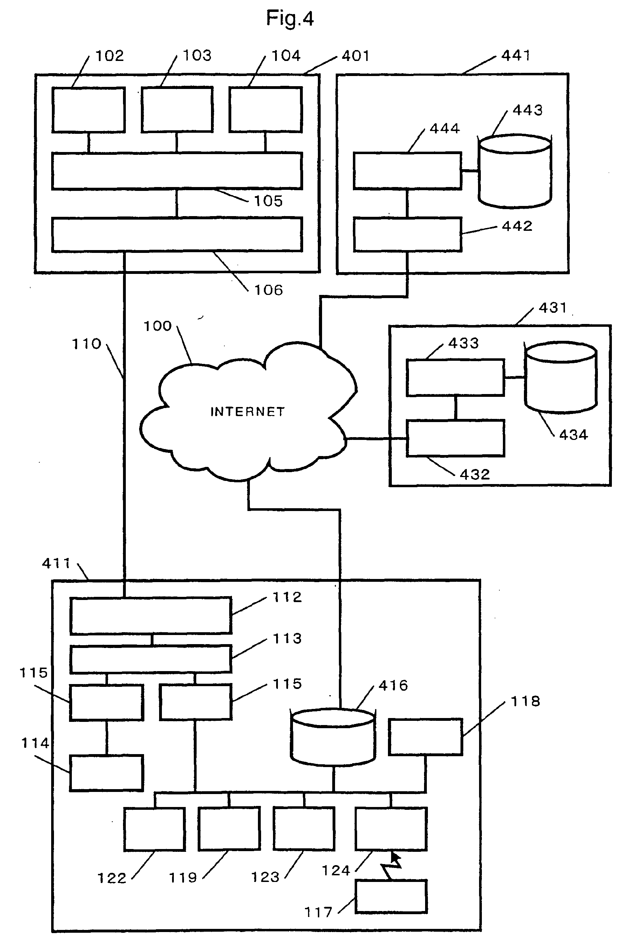

Fig. 4 shows a configuration diagram of a point-used electronic trading system in a third embodiment of the invention.

In Fig. 4, a broadcast center 401 has a program video 102, an advertisement 103, a multiplexer for multiplexing advertisement 103 content, e.g. the product attribute information 104 including product names, product item numbers, maker names, point-assignment/nonassignment discrimination, advertising broadcast session and advertising broadcast areas, and a broadcast transmitter 106 for sending a broadcast signal as an output thereof. A pay-broadcast customer management center 441 has a DSU/CSU 442 for connection to the Internet 100, a database 443 accumulating the billing information of from a viewer terminal 411 and the sponsor-based points-issued information of from an order-receiving center 431, and a computer 444 for managing those.

The viewer terminal 411 has a tuner 112 for receiving a broadcast, a demultiplexer 113 for separating a received multiplexed broadcast signal into a program video 102, an advertisement 103 and product attribute information 104, a monitor 114 for displaying the separated program video 102 and advertisement 103, a storage 416 for storing product attribute information 104 corresponding to the advertisement 103 displayed on the monitor 114, a remote control 117 for the viewer to place an order of a product, and a modem 118 for communication with the pay-broadcast customer management center 441 and order-receiving center 431 via the Internet 100.

The order-receiving center 431 has a DSU/CSU 432 for communication with the Internet 100, a computer 433 for carrying out order processing and point issuance, and a database 434 of product information, viewer point information and issued point information.

The point-used electronic trading system of the invention is configured to connect the foregoing broadcast center 401, the pay-broadcast customer management center 441, the viewer terminal 411 and the order-receiving center 431 together by the Internet 100.

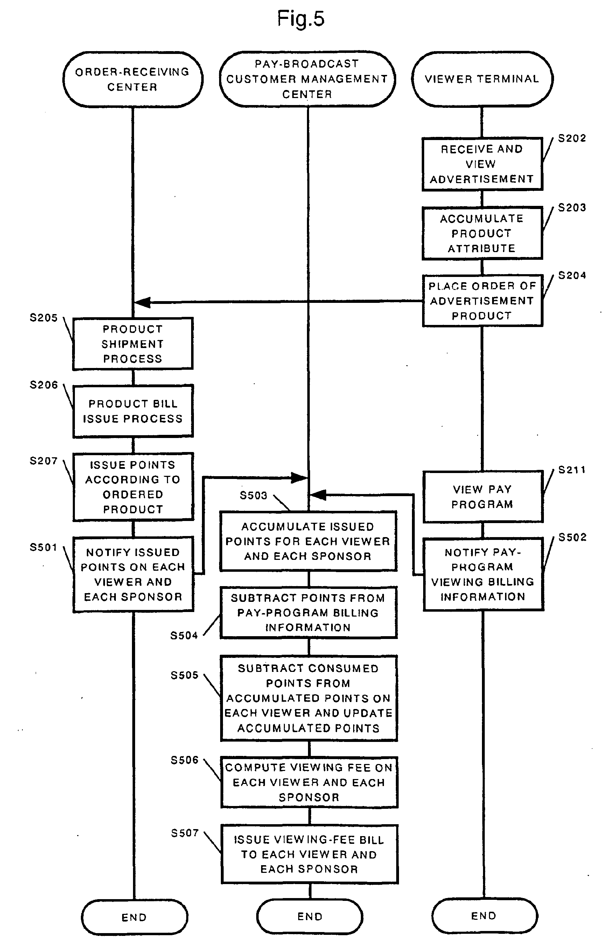

The point-used electronic trading system configured as above is described in its operation and function in the below, by using a flowchart shown in Fig. 5.

At first, the program video 102, the advertisement 103 and the product attribute information 104 are multiplexed in the multiplexer 105 and then outputted onto the broadcast network 110 from the broadcast transmitter 106 (step S201).

The viewer terminal 411 receives the broadcast at the tuner 112 and, at the demultiplexer 113, separated again into a program video 102, an advertisement 103 and product attribute information 104. The separated program video 102 and advertisement 103 is displayed on the monitor 114 through the decoder 115 (step S202). At this time, the product attribute information 104 corresponding to the displayed advertisement 103 is accumulated in a data form shown in Fig. 7, into a product attribute storing domain of within the storage 116 (step S203).

Then, when the viewer inputs a viewer code and product order code from the remote control 117, the CPU 119 of the viewer terminal 111 checks for whether or not the product attribute information 104 has been accumulated in the product attribute storing domain of within the storage 416. In the case accumulated, a points-issuance request code is sent in a data form shown in Fig. 8, together with the viewer code and order code, to the order-receiving center 131.

The process up to the above is the same as the first embodiment.

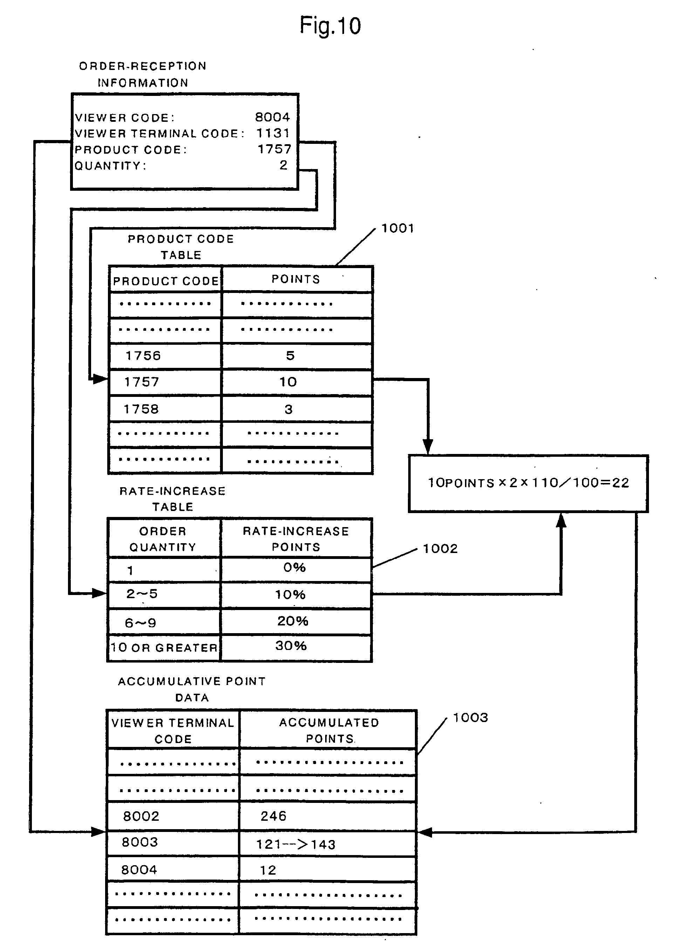

The order-receiving center 431 receives the order from the viewer terminal 411, and carries out a process of product shipment (step S205) and a process of charge settlement from the viewer's account (step S206), furthermore issuing points to the viewer (step S207). As shown in Fig. 10, the points are determined by a product code table 1001 accumulated in the database 434 and the number upon purchase based on an extra-rate table 1002, and stored as a gained points 1003, together with viewer terminal codes, based on each viewer terminal code 1003 within the database 434.

Simultaneously, the issued points are accumulated to the database 434, on a sponsor-by-sponsor basis of the ordered product. The viewer's gained points and the issued points are sent once per month to the pay-broadcast customer management center 441 (step S501).

At the viewer terminal 411, the CPU 119 answers when monthly inquired as to billing information, such as viewing time, viewing date and time, program code, of the pay programs viewed in the relevant month, from the pay-broadcast customer management center 441 through the Internet 100 (step S502).

The computer 444 of the pay-broadcast customer management center 441 inquires of the viewer terminal 411 as to the billing information of the relevant month in the above manner, and records the obtained billing information to the database 443 on a viewer-by-viewer basis (step S503). Meanwhile, from the order-receiving center 431, the sponsor-based points monthly issued and viewer-based gained points are monthly sent, which are recorded to the database 443 (step S503). The pay-broadcast customer management center 441 subtracts, from this billing information, a viewing fee in an amount of gained points (step S504), and stores it as billing information to the database 443. This record thereafter is computed as a viewing fee, to issue a bill to the viewer (step S507). The record of issued points is thereafter computed as a viewing fee (step S506), to issue a bill to each sponsor (step S507). The cumulative points are subtracted by a subtraction amount of billing information, to update the remaining points (step S505).

In also this embodiment, there is sufficiently a possibility of a difference between the enterprise having been entrusted advertisement to the broadcast center 101 and the enterprise shouldering a viewing fee in an amount of issued points. For this reason, the product attribute information shown in Fig. 7 and the sponsor code in the product order information shown in Fig. 8 are necessarily enterprise information of shouldering a viewing fee on issued points.

By carrying out the process as above, the third embodiment manages issued points and gained points at the order-receiving center or in one place, making it possible to easily carry out matching check of issued points and gained points, besides the effect realized in the first embodiment. Furthermore, point management is free from the affection by viewer terminal failure or unauthorized use, enabling to provide a point-used electronic trading system reliable for the sponsor.

### (Embodiment 4)

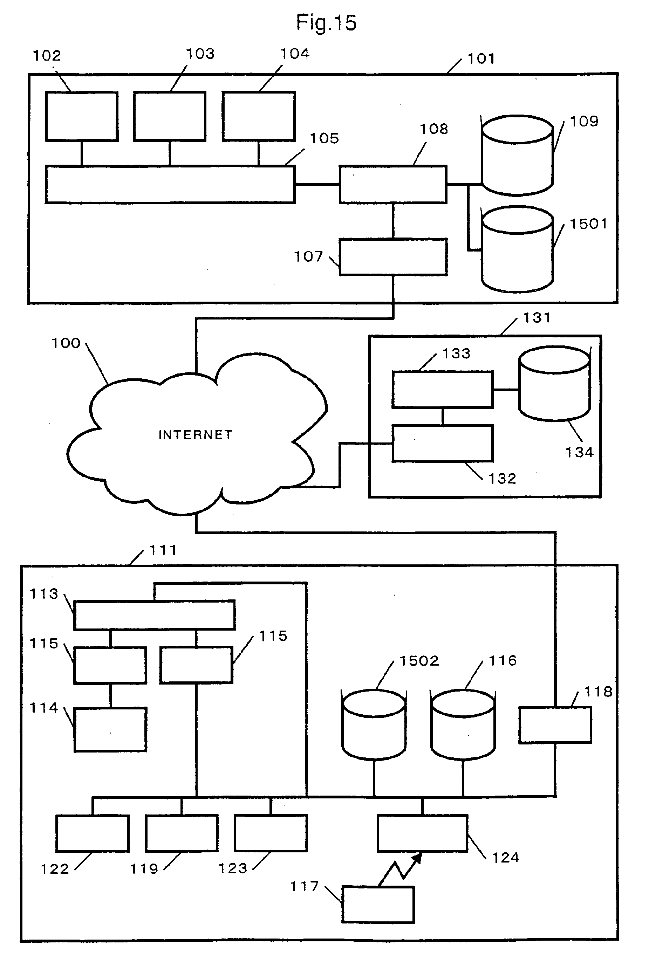

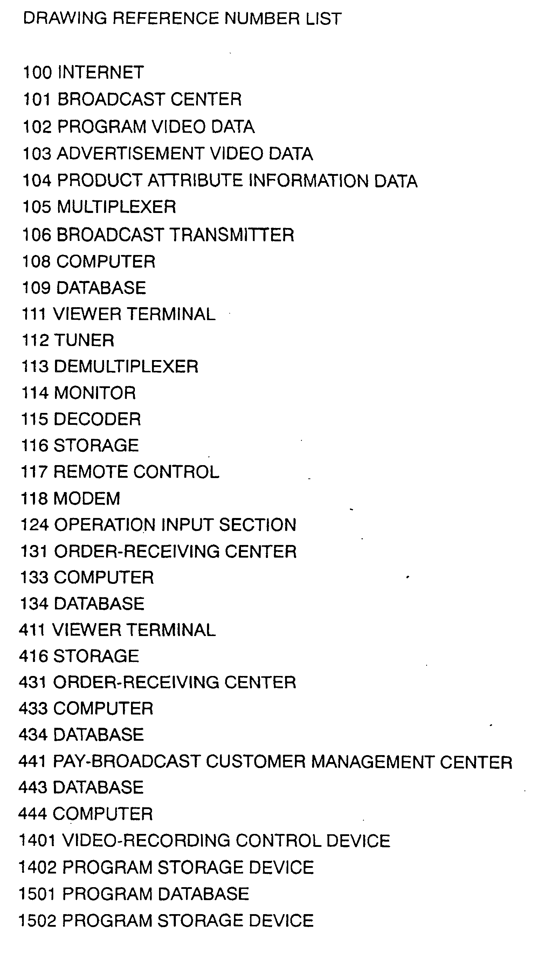

Fig. 15 shows a configuration diagram of a point-used electronic trading system in a fourth embodiment of the invention.

The difference from embodiment 1 lies in that the broadcast center 101 does not broadcast the program data multiplexed by the multiplexer 105 from the broadcast transmitter 106 but makes a delivery through the Internet 100, and in that the viewer terminal 111 once accumulates the program data captured from the modem 118 into a program storage device 1502 so that the accumulated program data can be viewed by separation into a video signal and the like by the demultiplexer 113.

Namely, the broadcast center 101 has a function as a delivery server having a program database 1501 for previously accumulating program data as contents for delivery and a program list describing programs for delivery and the billing information on those programs, and a function of managing the database 109 accumulating the billing information of from the viewer terminal 111 and sponsor-based issued-points information of from the order-receiving center 131.

Meanwhile, the viewer terminal 111 has a program storage device 1502 for accumulating the program data received from the Internet 100. By an instruction from the remote control 117, designated program data is read out and separated, in the demultiplexer 113, into video signal and the like. This program storage device 1502 can automatically accumulate pay program designated from the program list previously delivered. It is possible to realize a time-shift function for viewing in a desired time.

The point-used electronic trading system of embodiment 4 is configured with the broadcast center 101, viewer terminal 111 and order-receiving center 131 connected together by the Internet 100.

In also this point-used electronic trading system, similarly to embodiment 1, when the viewer terminal 111 reads a program from the program storage device 1502 in order for viewing, the demultiplexer 113 separates it and decoded product attribute information is recorded to the storage 116. Due to this, when the viewer places an order of a product, a points-issuance request code can be sent together with a viewer code and order code to the order-receiving center 131.

Meanwhile, the computer 108 of the broadcast center 101 can obtain billing information from the viewer terminal 111 similarly to embodiment 1 and issued points from the order-receiving center 131. Accordingly, billing is possible to the viewer for a charge discounted by the points issued on the viewer-by-viewer basis.

As in the above, this embodiment can obtain the similar effect to embodiment 1.

Also, through the Internet, two-way communication is possible between the broadcast center 101 and the viewer terminal 111. Accordingly, it is possible to realize an on-demand function to request, from the viewer terminal 111, the broadcast center 101 to deliver a program at a desired time. In also this case, the broadcast center 101 multiplexes an advertisement video and product attribute information together with a program video and sends them to a viewer terminal 111 placed a request, whereby points exchange is made similarly to the above. Similar effect can be obtained.

Incidentally, from the viewer terminal 111, configuration may be made to enable selection as to whether to deliver an advertisement video and product attribute information together with a program video when a program undergoes delivery.

### INDUSTRIAL APPLICABILITY

As in the above, the present invention is useful for electronic trading utilizing a program broadcast accompanied by advertisement delivery, and suited for prompting the user to view an advertisement, promoting the sale of the advertisement product without discount, and extending the demand for pay broadcasts.

## Claims

1. An electronic trading method that, over a data communication network connecting a broadcast center, a viewer terminal and an order receiving center together, a pay broadcast, an advertisement and product attribute information thereof from the broadcast center are viewed to place an order of an advertisement product from the viewer terminal thereby involving point exchange, a point-used electronic trading method having:
in the order receiving center
a step of receiving an order of an advertisement product from the viewer terminal;
a step of computing points in accordance with the advertisement product by the order and sending the points and sponsor information of the ordered product to the broadcast center; and
a step of sending the points to the viewer terminal;
in the broadcast center
a step of accumulating received points associatively with sponsor information;
in the viewer terminal
a step of accumulating received points, and sending billing information subtracted by a credit in an amount of the points from program-viewed billing information including a time viewed pay broadcasts to the broadcast center; and
a step of subtracting consumed points from accumulated points.

2. An electronic trading method that, over a data communication network connecting a broadcast center, a viewer terminal and an order receiving center together, a pay broadcast, an advertisement and product attribute information thereof from the broadcast center are viewed to place an order of an advertisement product from the viewer terminal thereby involving point exchange, a point-used electronic trading method having:
in the order receiving center
a step of receiving an order of an advertisement product from the viewer terminal;
a step of computing points in accordance with the advertisement product by the order and sending the points and sponsor information of the ordered product to the broadcast center; and
a step of sending the points to the viewer terminal;
in the broadcast center
a step of accumulating received points associatively with sponsor information;
a step of subtracting a credit in an amount of received point from program-viewed billing information; and
a step of sending consumed points to the viewer terminal;
in the viewer terminal
a step of accumulating received points and sending accumulated points to the broadcast center; and
a step of subtracting consumed points from accumulated points.

3. An electronic trading method that, over a data communication network connecting a pay-broadcast customer management center for managing viewing fee of pay broadcast on a customer-by-customer basis, a viewer terminal and an order receiving center together, a pay broadcast, an advertisement and product attribute information thereof from the broadcast center are viewed to place an order of an advertisement product from the viewer terminal thereby involving point exchange, a point-used electronic trading method having:
in the order receiving center
a step of receiving an order of an advertisement product from the viewer terminal; and
a step of computing points in accordance with the advertisement product by the order and sending the points, sponsor information of the ordered product and ordering-viewer information to the pay-broadcast customer management center;
in the pay-broadcast customer management center
a step of accumulating received points associatively with sponsor information and viewer information;
a step of subtracting, from program-viewed billing information received from the viewer terminal, a credit in an amount of received points accumulated associatively with the same viewer information, and subtracting consumed points from the points accumulated associatively with the viewer information;
in the viewer terminal
a step of sending program-viewed billing information including a time viewed pay programs to the pay-program broadcast customer center.

4. A point-used electronic trading method according to claim 1, having, in the viewer terminal,
an advertisement-viewing storing step of storing that an advertisement from the broadcast center has been viewed,
a step of determining whether or not the product the viewer has placed an order is a product meeting the product attribute information stored in the advertisement-viewing storing step, and
a step of attaching information of having viewed the product in an order in a case of a determination as a product meeting the stored product attribute information, and
in the order-receiving center,
a step of issuing points only in a case that the order from the viewer terminal is attached with information having viewed the product.

5. A point-used electronic trading method according to claim 2, having, in the viewer terminal,
an advertisement-viewing storing step of storing that an advertisement from the broadcast center has been viewed,
a step of determining whether or not the product the viewer has placed an order is a product meeting the product attribute information stored in the advertisement-viewing storing step, and
a step of attaching information of having viewed the product in an order in a case of a determination as a product meeting the stored product attribute information, and
in the order-receiving center,
a step of issuing points only in a case that the order from the viewer terminal is attached with information having viewed the product.

6. A point-used electronic trading method according to claim 3, having, in the viewer terminal,
an advertisement-viewing storing step of storing that an advertisement from the broadcast center has been viewed,
a step of determining whether or not the product the viewer has placed an order is a product meeting the product attribute information stored in the advertisement-viewing storing step, and
a step of attaching information of having viewed the product in an order in a case of a determination as a product meeting the stored product attribute information, and
in the order-receiving center,
a step of issuing points only in a case that the order from the viewer terminal is attached with information having viewed the product.

7. A point-used commerce trading system having:
product attribute attaching means for attaching product attribute information including a presence or absence of points to an advertisement;
broadcast means for broadcasting an advertisement attached with the product attribute information;
video receiving means for receiving the advertisement;
video display means for displaying the advertisement;
attribute information accumulating means for accumulating product attribute information of the advertisement displayed;
order means for a viewer to place an order of a product meeting the product attribute information;
point generating means for generating points according to an order of a product;
enterprise point accumulating means for associatively accumulating the points and sponsor information;
point information transmitting means for sending the points generated, and both the points and the sponsor information accumulated in the enterprise point accumulating means;
point accumulating means for receiving and accumulating points from the point information transmitting means;
point exchange means for subtracting a credit in an amount of the points from billing information on pay broadcast;
means for sending billing information subtracted by the point exchange means;
and accumulation point remainder updating means for subtracting points consumed in subtracting the billing information from the point accumulating means and replacing same with accumulated points.

8. A point-used commerce trading system having:
product attribute attaching means for attaching product attribute information including a presence or absence of points to an advertisement;
broadcast means for broadcasting an advertisement attached with the product attribute information; video receiving means for receiving the advertisement;
video display means for displaying the advertisement;
attribute information accumulating means for accumulating product attribute information of the advertisement displayed;
order means for a viewer to place an order of a product meeting the product attribute information;
point generating means for generating points according to an order of a product;
enterprise point accumulating means for associatively accumulating the points and sponsor information;
point information transmitting means for sending the points generated, and both the points and the sponsor information accumulated in the enterprise point accumulating means;
point accumulating means for receiving and accumulating points from the point information transmitting means;
accumulated-point transmitting means for sending program-viewed billing information including points accumulated in the point accumulating means and a time pay broadcast has been viewed;
point exchange means for subtracting from the program-viewed billing information in accordance with the points from this accumulated-point transmitting means;
consumed-point notifying means for sending points consumed in subtracting the billing information;
and accumulated-point remainder update means for subtracting consumed points received from the consumed-point notifying means from the point accumulating means and replacing same with accumulated points.

9. A point-used commerce trading system having:
product attribute attaching means for attaching product attribute information including a presence or absence of points to an advertisement;
broadcast means for broadcasting an advertisement attached with the product attribute information;
video receiving means for receiving the advertisement;
video display means for displaying the advertisement;
attribute information accumulating means for accumulating product attribute information of the advertisement displayed;
order means for a viewer to place an order of a product meeting the product attribute information;
point generating means for generating points according to an order of the product;
point-information transmitting means for sending the points, sponsor information and ordering viewer information;
point accumulating means for respectively accumulating points received from the point-information transmitting means associatively with sponsor information and viewer information similarly received;
accumulated-point transmitting means for sending program-viewed information billing information including a time pay broadcast has been viewed;
point exchanging means for subtracting a credit in an amount of points accumulated associatively with the same viewer information from the program-viewed billing information;
and accumulated-point remainder update means for subtracting points consumed in subtracting the billing information from remaining points corresponding to the viewer information of within the point accumulating means and replacing same with accumulated points.

10. A broadcast reception apparatus having:
a receiving section for receiving a broadcast;
an attribute information extracting section for extracting product attribute information including a presence or absence of advertisement points from a signal received by the receiving section;
an attribute information storing section for accumulating product attribute information extracted at the attribute information extracting section;
a product designating section for designating a product a viewer desires for placing an order;
an order-product determining section for determining whether or not the product meets product attribute information stored in the attribute information storing section;
a point product ordering section for outputting order information and point-requesting information in a case determined meeting by the order-product determining section;
a point receiving section for receiving points given from an order-receiving side according to an order from the point product ordering section;
a gained-point accumulating section for accumulating points received by the point receiving section;
a billing-information transmitting section for sending, to a broadcast distribution source, billing information that points accumulated in the gained-point accumulating section are subtracted from billing information of pay broadcast; and
a gained-point operating section for subtracting points assigned to the billing from gained points.

11. A broadcast reception apparatus having:
a receiving section for receiving a broadcast;
an attribute information extracting section for extracting product attribute information including a presence or absence of advertisement points from a signal received by the receiving section;
an attribute information storing section for accumulating product attribute information extracted by the attribute information extracting section;
a product designating section for designating a product a viewer desires for placing an order;
an order-product determining section for determining whether or not the product meets product attribute information stored in the attribute information storing section;
a point product ordering section for outputting order information and point-requesting information in a case determined meeting by the order-product determining section;
a point receiving section for receiving points given from an order-receiving side according to an order from the point product ordering section;
a gained-point accumulating section for accumulating points received by the point receiving section;
a billing-point information transmitting section for sending, to a broadcast distribution source, billing information of pay broadcast and points accumulated in the gained-point accumulating section; and
a gained-point operating section for receiving the points assigned to billing, and subtracting the received points assigned to billing from gained points.

12. A broadcast reception apparatus having:
a receiving section for receiving a broadcast;
an attribute information extracting section for extracting product attribute information including a presence or absence of advertisement points from a signal received by the receiving section;
an attribute information storing section for accumulating product attribute information extracted by the attribute information extracting section;
a product designating section for designating a product a viewer desires for placing an order;
an order-product determining section for determining whether or not the product meets product attribute information stored in the attribute information storing section;
a point product ordering section for outputting order information and point-requesting information in a case determined meeting by the order-product determining section; and
a billing-information transmitting section for sending billing information of pay broadcast.

13. A broadcast reception method having:
an attribute-information extracting step of extracting product attribute information including a presence or absence of advertisement points from a received broadcast;
an attribute information storing step of accumulating product attribute information extracted at the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-information transmitting step of sending billing information that a credit in an amount of the accumulated points is subtracted from program-viewed billing information of pay broadcast, to a center managing pay-broadcast billing on a viewer-by-viewer basis; and
a point remainder update step of updating the points accumulated into points subtracted by the points assigned to billing.

14. A broadcast reception method having:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-point information transmitting step of sending pay-broadcast billing information and the points accumulated to a center managing pay-broadcast billing on a viewer-by-viewer basis; and
a gained-point operating step of receiving the points assigned to billing, and subtracting the received points assigned to billing from gained points.

15. A broadcast reception method having:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step; and
a billing-information transmitting step of sending pay-broadcast billing information to a center managing pay-broadcast billing on a viewer-by-viewer basis.

16. A computer program product comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-information transmitting step of sending billing information that a credit in an amount of the accumulated points is subtracted from program-viewed billing information of pay broadcast, to a center managing pay-broadcast billing on a viewer-by-viewer basis; and
a point remainder update step of updating the points accumulated into points subtracted by the points assigned to billing.

17. A computer program product comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-point information transmitting step of sending pay-broadcast billing information and the points accumulated to a center managing pay-broadcast billing on a viewer-by-viewer basis; and
a gained-point operating step of receiving the points assigned to billing, and subtracting the received points assigned to billing from gained points.

18. A computer program product comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step; and
a billing-information transmitting step of sending pay-broadcast billing information to a center managing pay-broadcast billing on a viewer-by-viewer basis.

19. A storage medium for providing a computer program, comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-information transmitting step of sending billing information that a credit in an amount of the accumulated points is subtracted from program-viewed billing information of pay broadcast, to a center managing pay-broadcast billing on a viewer-by-viewer basis; and
a point remainder update step of updating the points accumulated into points subtracted by the points assigned to billing.

20. A storage medium for providing a computer program, comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a point accumulating step of accumulating points received from an order receiving side according to an order from the point-product order step;
a billing-point information transmitting step of sending pay-broadcast billing information and the points accumulated to a center managing pay-broadcast billing on a viewer-by-viewer basis; and
a gained-point operating step of receiving the points assigned to billing, and subtracting the received points assigned to billing from gained points.

21. A storage medium for providing a computer program, comprising:
an attribute-information extracting step of extracting product attribute information including a presence or absence of advertisement points from a received broadcast;
an attribute information storing step of accumulating product attribute information extracted in the attribute-information extracting step;
an order-product determining step of determining whether or not a product a viewer has designated for placing an order meets product attribute information stored;
a point-product order step for outputting order information and point-requesting information in a case determined meeting by the order-product determining step;
a billing-information transmitting step of sending pay-broadcast billing information to a center managing pay-broadcast billing on a viewer-by-viewer basis.
